Europäisches Patentamt

European Patent Office

Office européen des brevets

(19)

(11) **EP 0 803 061 B1**

(12) **EUROPEAN PATENT SPECIFICATION**

(45) Date of publication and mention of the grant of the patent:
**06.05.2004 Bulletin 2004/19**

(51) Int Cl.$^7$: **G01N 25/00**, G01K 17/00, G01N 25/48

(21) Application number: **95921344.8**

(22) Date of filing: **22.05.1995**

(86) International application number:
**PCT/US1995/006464**

(87) International publication number:
**WO 1995/033199 (07.12.1995 Gazette 1995/52)**

(54) **APPARATUS AND METHOD FOR DIFFERENTIAL ANALYSIS USING REAL AND IMAGINARY SIGNAL COMPONENTS**

GERÄT UND VERFAHREN ZUR DIFFERENTIALANAYSE UNTER VERWENDUNG VON REALEN UND IMAGINÄREN SIGNALKOMPONENTEN

APPAREIL ET PROCEDE D'ANALYSE DIFFENTIELLE UTILISANT LES COMPOSANTS DE SIGNAUX IMAGINAIRES ET REELS

(84) Designated Contracting States:
**CH DE FR GB LI NL**

(30) Priority: **01.06.1994 US 252597**
**03.03.1995 US 398572**

(43) Date of publication of application:
**29.10.1997 Bulletin 1997/44**

(73) Proprietor: **PERKIN-ELMER CORPORATION**
**Norwalk, CT 06859-0181 (US)**

(72) Inventors:
• **SCHAWE, Juergen**
**D-89134 Blaustein (DE)**
• **MARGULIES, Marcel**
**Scarsdale, NY 10583 (US)**

(74) Representative: **Grünecker, Kinkeldey,**
**Stockmair & Schwanhäusser Anwaltssozietät**
**Maximilianstrasse 58**
**80538 München (DE)**

(56) References cited:
EP-A- 0 645 619    DE-A- 3 529 489
GB-A- 1 431 111    GB-A- 2 075 675
US-A- 4 255 961    US-A- 4 517 021
US-A- 5 224 775

• DSC 2910 DIFFERENTIAL SCANNING CALORIMETER OPERATOR'S MANUAL, by TA Instruments, September 1991, pages 6.1-6.10.
• MEASUREMENT SCIENCE & TECHNOLOGY, 3, (29 January 1992), JUNG D.H., KWON T.W., BAE D.J., MOON I.K. and JEONG YOON H., "Fully Automated Dynamic Calorimeter", pages 475-478.
• PHYSICAL REVIEW LETTERS, Volume 54, Number 25, 24 June 1985, BIRGE N.O. and NAGEL S.R., "Specific-Heat Spectroscopy of the Glass Transition", pages 2674-2676.

## Description

## Background of the Invention

The present invention relates to a method and apparatus for differential thermal analysis. Differential thermal techniques generally consist of applying heat simultaneously to a sample material and a reference material and measuring a parameter, such as differential power input, as the sample goes through a physical or chemical change. In differential thermal analysis (DTA), the sample and reference are heated or cooled according to a programmed rate, and the temperature differential between the sample and reference is measured as the scan proceeds. In differential scanning calorimetry (DSC), differential power rather than differential temperature is measured. The differential power represents the difference in energy required to maintain the sample and reference in accord with a heating or cooling program.

In addition to DSC and DTA, other differential thermal techniques also exist to measure basic properties that change with temperature. In differential dielectric analysis (DDA) a property of the sample (dielectric constant) is measured while the temperature is changed. Further, in differential thermogravimetric analysis (DTGA), differential weight loss of a sample is monitored as the temperature is increased.

The present invention has particular application in what is referred to as dynamic differential scanning calorimetry, which is a form of dynamic differential thermal analysis. Dynamic differential thermal techniques were discussed in a 1964 article, "Theory and Measurements of the Glass-Transformation Interval of Polystyrene," Wunderlich et al., published in the Journal of Applied Physics, Vol. 35, No. 1, pp. 95-102 (January 1964).

EP-A-0645619 describes a thermal analysis instrument. The temperature of a heat reservoir is varied and at this time, the temperature difference between two points located in a heat flow path going from the heat reservoir to an unknown sample is measured. Also, the temperature difference between two points located in a heat flow path going from the heat reservoir to a reference sample is measured. These two pairs of points are arranged symmetrically. Then, the resulting signals are demodulated and each signal is divided into an AC component and a low-frequency component. Using these signals, the DSC signal is separated into a heat capacity component and a latent heat component.

GB-A-1431111 teaches a differential analysis apparatus wherein sample and reference are subjected to an externally applied disturbance, comprising the discrimination of a detected characteristic parameter into real and imaginary components in order to calculate the dynamic modulus of elasticity and dynamic loss modulus of a sample.

The present invention provides a method and apparatus for various dynamic differential thermal techniques to process the differential signal into real (inphase) and imaginary (quadrature) components which are related to the "energy storage" and "energy loss" portions of the thermal event being studied. The inphase and quadrature components provide physical and thermodynamic information for thermal events which are time-independent or time-dependent.

## Brief Description Of The Drawings

Fig. 1 is a schematic diagram illustrating a "power compensation" differential scanning calorimeter, which includes two control loops and is adapted to implement the present invention.

Fig. 1A is an example of a temperature program utilized in the present invention comprising an isothermal segment followed by a heat scan segment of equal time duration.

Fig. 1B is an example of a temperature program comprising a heat scan segment followed by an isothermal segment.

Fig. 1C is an example of a temperature program comprising a heat scan segment followed by a cool scan segment.

Fig. 1D is an example of a temperature program comprising a cool scan segment followed by a heat scan segment.

Fig. 1E is an example of a temperature program comprising an isothermal segment followed by a cool scan segment.

Fig. 1F is an example of a temperature program comprising a cool scan segment followed by an isothermal segment.

Fig. 1G is an example of a variant of the temperature program shown in FIG. 1D.

Fig. 1H is an example of a variant of the temperature program shown in FIG. 1C.

Fig. 2 is a schematic diagram illustrating a DTA instrument which is adapted to implement the present invention.

Fig. 3 is a schematic diagram illustrating a "heat flux" differential scanning calorimeter which is adapted to implement the present invention.

Fig. 4 is a plot of heat capacity vs. temperature with data representing total heat capacity, the energy storage (real) portion of the heat capacity and the energy loss (imaginary) portion of the heat capacity which are obtained according to the method and apparatus of the present invention.

Fig. 5 is a plot of heat capacity vs. temperature with data representing the energy loss (imaginary) and energy storage (real) portions of the heat capacity, and the total heat capacity which are obtained according to the method and apparatus of the present invention.

Fig. 6 is a plot of heat capacity vs. temperature with data representing the energy loss (imaginary) and energy storage (real) portions of the heat capacity, and the total heat capacity which are obtained according to the method and apparatus of the present invention.

Fig. 7 is a graph representing an interpolation method for determining $\varphi_g$.

## Summary of The Invention

The invention is directed to a differential analysis apparatus according to claim 1.

The invention is further related to a method of analysing a sample using a differential analysis apparatus according to claim 7.

## Detailed Description Of The Invention

The present invention finds application in differential analysis methods and apparatus including, but not limited to, DTA, DSC, DDA, and differential photocalorimetry (DPC). While the following detailed description is provided with reference to DSC and DTA, the present invention is not limited to an apparatus comprising, or method employing, DSC and DTA.

In a preferred embodiment of the invention, the user chooses a temperature program consisting of two linear segments of equal time duration. Creation of thermal methods that utilize linear segments, such as isothermal segments, linear heat segments and linear cool segments, is well known in the art, for example, as described in the Operator's Manual (dated September 1991) for the Model DSC 2910 Differential Scanning Calorimeter sold by TA Instruments, Inc. of New Castle, Delaware.

The term "temperature program" as used herein means a combination of any two or more segments where each segment is linear and each segment is of identical time duration. As previously noted, a preferred embodiment of the present invention utilizes a two-step temperature program and the description that follows is based on such a two-step temperature program, although the present invention is not so limited, but also encompasses any temperature program consisting of two or more segments where each segment is linear and of equal time duration.

The linearly changing part that constitutes each segment can have a positive slope (heating), negative slope (cooling), or zero slope (isothermal). In the preferred embodiment, once the two-segment temperature program is chosen, the program is repeated an arbitrary number of times, as is well known in the art, to produce the desired thermal method. For example, the Model DSC 2910 Differential Scanning Calorimeter from TA Instruments referenced above allows for repeating a chosen combination of one or more segments, such as isothermal segments or scan segments, an arbitrary number of times up to 9999 times.

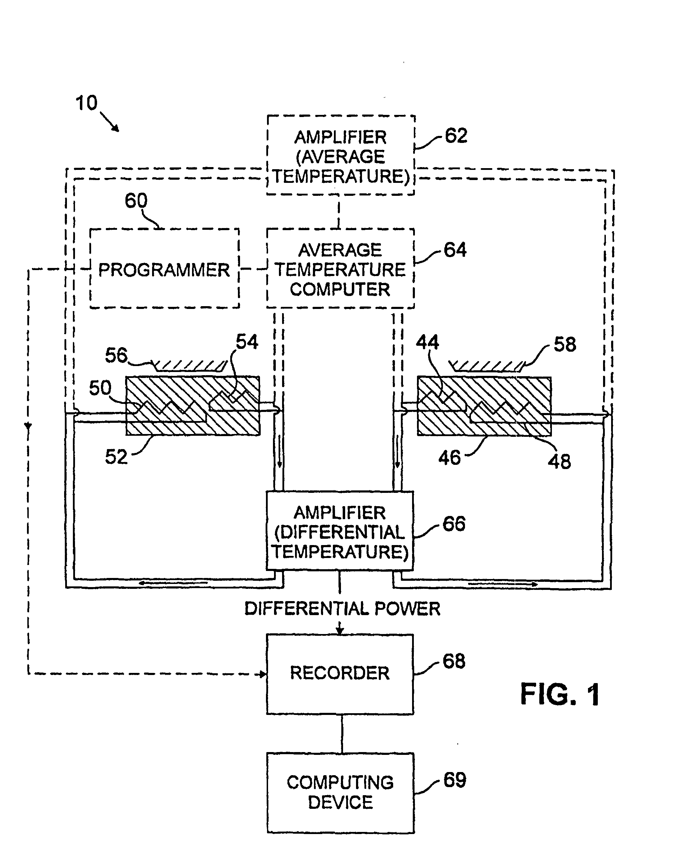

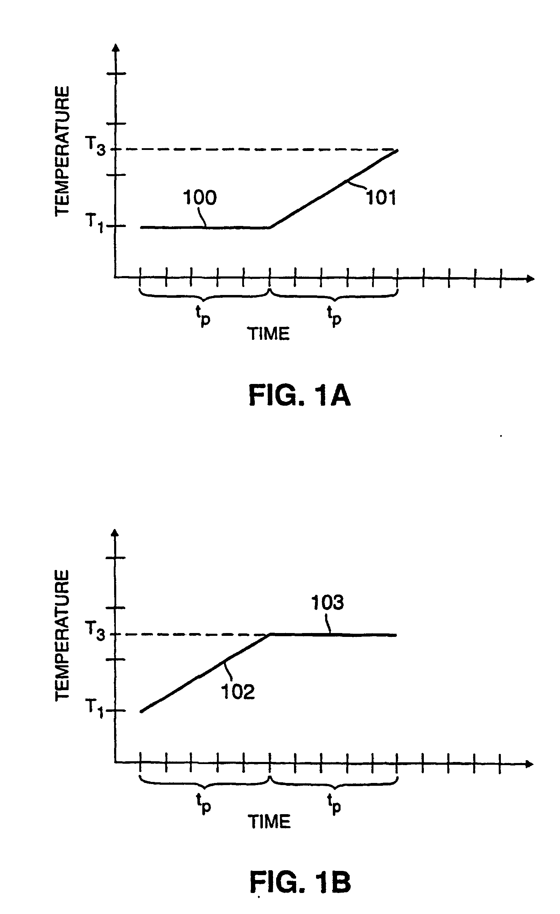

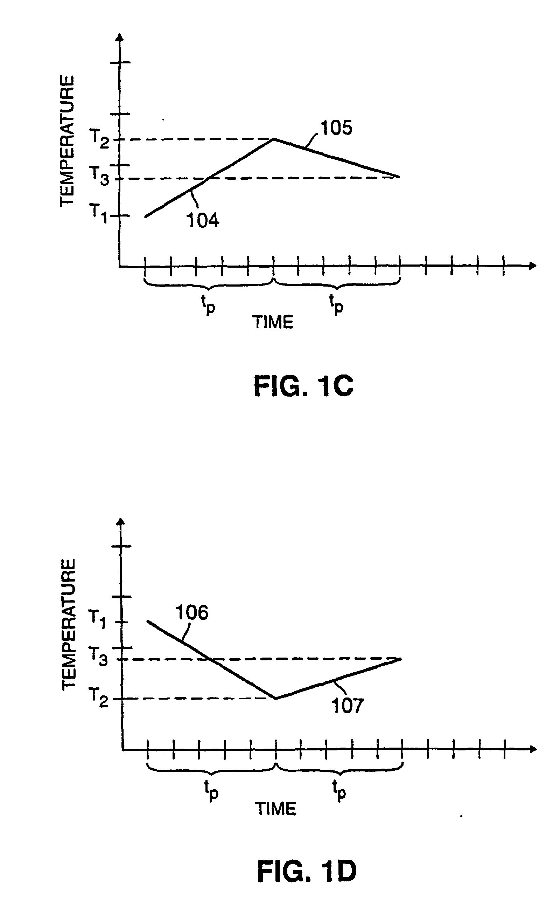

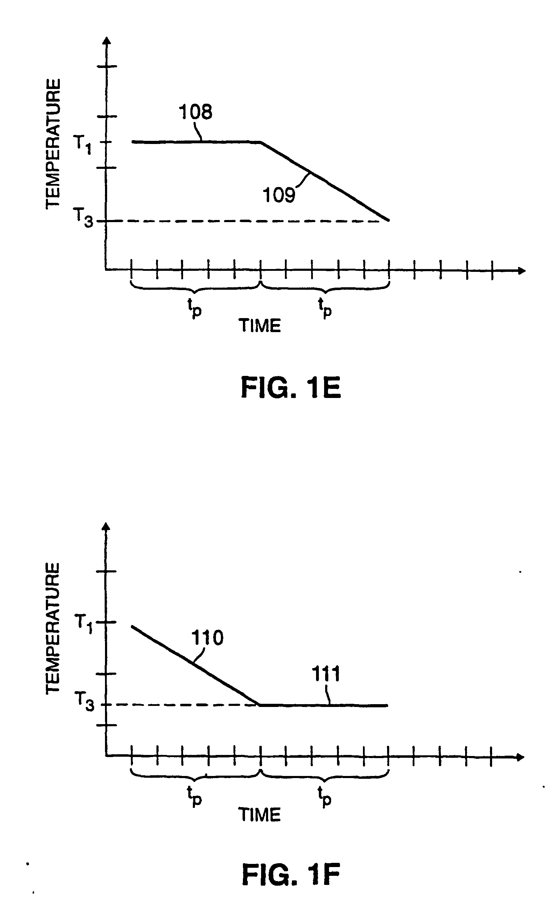

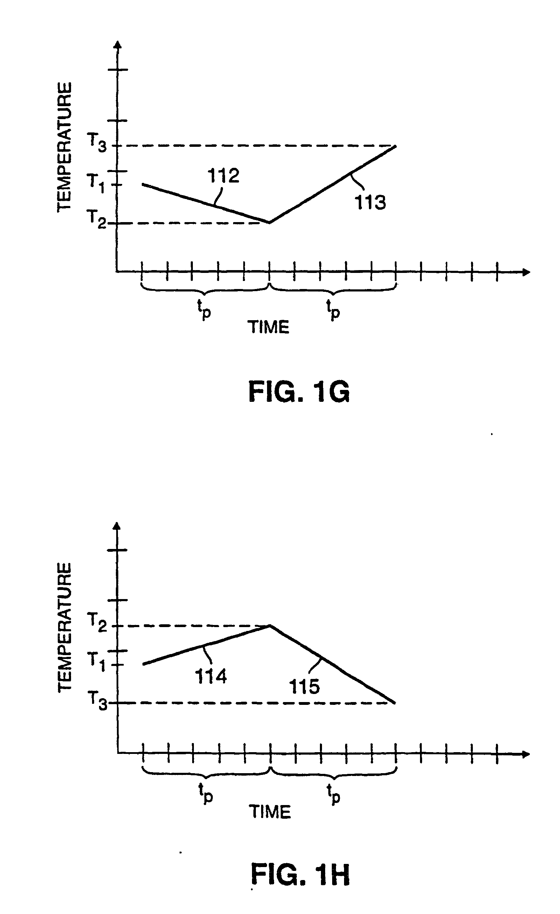

FIG. 1 illustrates a portion 10 of a DSC, for example, a Perkin-Elmer Corporation DSC-7 type of calorimeter, which can be used to implement the present invention. The user's manual to the DSC-7 calorimeter, entitled "Users Manual, 7 Series/Unix DSC7, Differential Scanning Calorimeter," is herein incorporated by reference. This instrument measures the differential power required to keep both sample and reference sensors 44, 54 at the same temperature throughout the DSC experiment. The apparatus, as illustrated, is described and explained in basic terms in E.S. Watson et al., "A Differential Scanning Calorimeter for Quantitative Differential Analysis," Anal. Chem. 36(7), 1233-1238 (1964).

In Fig. 1, reference and sample containers 56 and 58, respectively, are mounted on platforms 52 and 46. The reference generally is a standard (or simply the empty container) and the sample is a material having some characteristic parameter to be compared with that of the standard. As used herein, the term "characteristic parameter" means any property representative of the sample which is measured differentially with respect to the reference.

With respect to differential scanning calorimetry, characteristic parameters include differential power input and differential heat flow. Examples of other characteristic parameters for other analysis techniques include differential temperature, dielectric constant, and differential weight loss.

The reference 56 and sample 58 are subjected to a programmed heating or cooling program through a process of programmed and balanced heating. The programmed heating or cooling run subjects the sample and reference to an externally applied disturbance. The term "applied disturbance", as used herein, means a physical stress applied to both the sample and reference which permits, in accord with the differential technique used, the measurement of a characteristic parameter of the sample. In DSC and DTA, the applied disturbance is heat which induces a change in temperature (though not a change in average temperature if an isothermal function is used).

In DDA, the applied disturbance is an electrical field. In DPC, the applied disturbance is a lightwave.

Both the programmed heating and the balanced heating are performed through the reference heater 50 and the sample heater 48 in the reference and sample bases 52, 46. The heaters are powered with alternating current, and on one half-cycle the power supplied to both heaters is controlled by the temperature programmer 60. On the other half-cycle, however, a different power is supplied to each heater to nullify any temperature differential between the sample and the reference as sensed with the platinum resistance thermometers 54, 44 in the container bases. Thus, the heating system has two control loops, one responding to the temperature program and the other responding to the different energy requirements of the sample and reference. The average temperature amplifier 62, average temperature computer 64, recorder 68 and differential temperature amplifier 66 interact to maintain the two control loops as explained with respect to Fig. 1 in the following paragraph. The instrument responds very rapidly so that the deviation of the sample temperature from the reference temperature is negligible, and therefore the sample temperature follows the predetermined program even though it may undergo a thermal event (such as a phase or glass transition).

The system of Fig. 1 can be divided into two separate control loops, one loop for average temperature control and the other for differential temperature control. In the average temperature control loop, the programmer 60 provides a signal which is proportional to the desired temperature of the sample holder 58 and the reference holder 56. The programmer information is also relayed to the recorder 68 and appears as the abscissa scale marking. The programmer signal reaches the average temperature amplifier 62 and is compared with signals received from resistance thermometers 54, 44 via the average temperature computer 64. If the average temperature is greater than the temperature called for by the programmer 60, then the power supplied to the sample and reference heaters 48, 50 is decreased, and vice versa if the average temperature is less than that called for by the programmer 60.

In the differential temperature control loop, temperature signals received from the resistance thermometers 44, 54 are relayed to the differential temperature amplifier 66 via a comparator circuit (not shown) which determines whether the sample or reference temperature signal is greater. The differential temperature amplifier 66 responds to a disparity in the sample and reference temperature signals by adjusting the differential power increment fed to the sample and reference heaters 48, 50 to correct the temperature difference. A signal proportional to the differential power is sent to the recorder 68. The recorder 68 relays the differential signal to computing device 69 which processes the signal to provide the user with the characteristic parameter of the sample. Such computing devices include any appropriate commercially-available device, including desktop personal computers, such as the Perkin-Elmer Unix 7-Series data station.

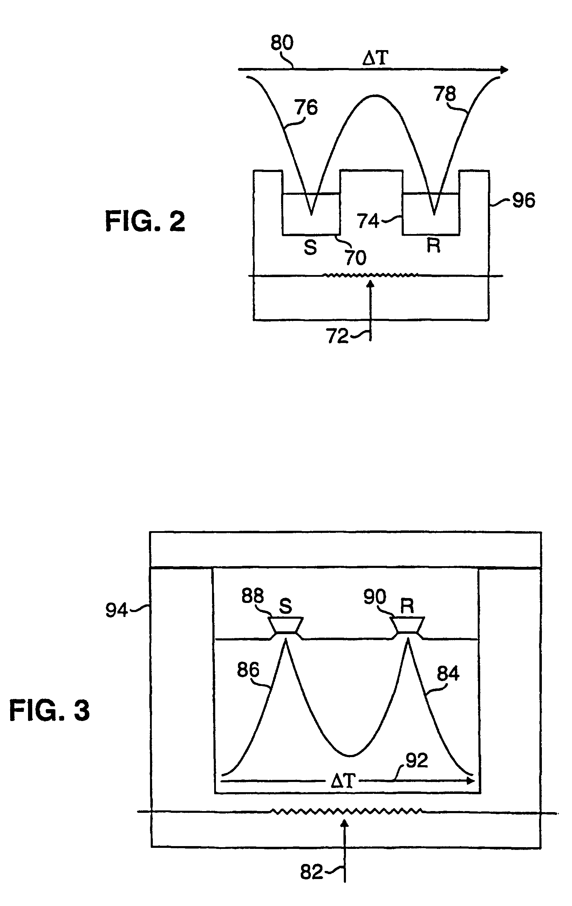

The foregoing description relating to Fig. 1 is directed to "power compensation" DSC. The structure of the apparatus for the present invention also includes instrumentation for "heat flux" DSC, as depicted in Fig. 3, and differential thermal analysis (DTA), as depicted in Fig. 2. Unlike "power compensation" DSC, the signal obtained in DTA or "heat flux" DSC is derived from the temperature difference between the sample and reference. The distinction between DTA and heat flux DSC is not substantial, and thus it is possible to calibrate a differential thermal analyzer for use as a heat flux DSC. Such a modification is described in F. Hongtu, P.G. Laye, Thermochim. Acta 153, 311 (1989).

In power compensation DSC, the sample and reference are provided with individual heaters. As shown in Fig. 2, the DTA technique provides an instrument 96 with a single heater 72 for both sample 70 and reference 74. Heat flux DSC, as shown in Fig. 3, provides an instrument 94 with a single heater 82 which heats both sample 88 and reference 90. In DTA, the temperatures of the sample and reference are detected, respectively, by sensors 76 and 80 which can be imbedded in the sample and reference materials. Heat flux DSC, on the other hand, uses a sample temperature sensor 86 and a reference temperature sensor 84, which are attached to a conductive membrane under pans which hold the sample and reference materials. In both DTA and heat flux DSC, the differential temperature 80 (Fig. 2) and 92 (Fig. 3) is determined. The DTA and heat flux DSC techniques, while considered to be inherently less quantitative than DSC, can be used to implement the method and apparatus of the present invention.

FIGS. 1A, 1B, 1C, 1D, 1E, 1F, 1G and 1H provide examples of two segment temperature programs that may be utilized in the present invention.

In FIG. 1A, an isothermal segment 100 of a fixed time duration "$t_p$" is followed by a heat scan segment 101 of equal time duration. The user chooses the time duration of the isothermal segment and then chooses the temperature span (the total change in temperature over the scan) of the heat scan segment 101. The system will automatically calculate the slope of the heat scan segment so that the time duration of the scan segment matches the time duration of the isotherm segment, according to the following equation:

$$slope = \frac{T_3 - T_1}{t_p}.$$

In FIG. 1B, the order of the segments from FIG. 1A for the temperature program is reversed, where the user chooses the temperature span for the heat scan segment 102 and the time duration "$t_p$" of the heat scan segment. The system will then automatically create an isothermal segment 103 of the same time duration as the time duration of the heat scan segment.

In FIG. 1C, the user selects the temperature span and the rate of the heat scan segment 104. The user also selects the temperature span of the cool scan segment 105. The system will calculate the time duration of the first scan segment 104 and the slope of the cool scan segment 105 so that the time duration of the heat scan segment equals the time duration of the cool scan segment. In the FIG. 1C embodiment, the temperature span of the heat scan segment 104 chosen by the user is more than the temperature span of the cool scan segment 105.

FIG. 1D is the reverse of FIG. 1C. In FIG. 1D, the temperature program consists of a cool scan segment 106 followed by a heat scan unit 107. The temperature span of the heat scan segment 107 is less than the temperature span of the cool scan segment 106.

The temperature programs shown in FIGS. 1E and 1F are selected in a similar fashion to the temperature programs in FIGS. 1A and 1B, except that FIGS. 1E and 1F combine an isothermal segment (108, 111, respectively) with a cool scan segment (109, 110, respectively).

The temperature programs of FIGS. 1G and 1H are somewhat the reciprocal of FIGS. 1C and 1D. In FIG. 1G, the temperature span of heat scan segment 113 is more than the temperature span of cool scan segment 112. In FIG. 1H, the temperature span of heat scan segment 114 is less than the temperature span of cool scan segment 115.

In order to create a thermal method, a temperature program (for example, one of the temperature programs shown in FIGS. 1A-1H) is repeated an arbitrary number of times as selected by the user.

It has been determined that time durations in the range of 5 seconds to 500 seconds for each segment are suitable for use in the present invention, with a temperature span for a scan segment being in the range of $0.1°C$ to $20°C$.

Typically, the user would choose to repeat each temperature program about 50 times, where each temperature program would begin at the end temperature of the second segment of the immediately preceding temperature program. However, a user can choose to repeat a temperature program an arbitrary number of times.

The beginning temperature of each temperature program shown in Figs. 1A-1H is designated "$T_1$" and the end temperature of the temperature program is designated "$T_3$". For those temperature programs consisting of two scan segments (Figs. 1C, 1D, 1G and 1H), "$T_2$" represents the temperature at the end of the first scan segment.

A temperature program consisting of an isothermal segment and either a heat scan segment or a cool scan segment (FIGS. 1A, 1B, 1E or 1F) would be useful, for example, when heating through a crystalline melt or when cooling through the recrystallization of a crystalline melt, respectively. When analyzing a material as it melts, it is important that the sample not be cooled down during the melting event because crystallization during a cooling condition would create significant problems if one is trying to determine if recrystallization is occurring during the melt.

A temperature program consisting of a heat scan segment followed by a cool scan segment or vice versa (FIGS. 1C, 1D) would be useful, for example, to extract the glass transition event from other events which obscure it, such as recrystallization on heating or enthalpy effects caused by prior thermal and mechanical history. Use of the heat. scan/cool scan temperature program may also provide additional advantages in terms of sensitivity and resolution of the measurements.

### Theory Underlying The Invention

### Time-Dependent Linear Phenomena

If a physical system is in equilibrium, then no energy loss (dissipation) occurs, and the entropy remains unchanged (second law of thermodynamics). The system can then be described by time-independent potentials and the material properties are described by time-independent parameters (such as dielectric constant, compressibility modulus or heat capacity $C_p$). In this case the DSC measurement curves are described, excluding the effects of thermal conduction, by equilibrium thermodynamics.

However, many thermal events are dependent on time and linked with energy loss (dissipation, or entropy change). Such events include biological processes, chemical reactions, glass transitions, and kinetically determined phase transitions. If the system is near equilibrium and if disturbances of the system during measurement are sufficiently small-scale, these events can be described by a linear response theory (see R. Kubo, Rep. Prog. Phys. 29, 255 (1966)).

If the measurement involves a disturbance by an intensive variable (such as temperature), then an extensive variable is measured (such as enthalpy $H$). In accord with the present invention, the relevant material property of the sample (such as heat capacity) can then be associated with an auto-correlation or retardation function $\phi(t)$.

Most generally, one can write a relationship between variations in temperature and the corresponding variations in enthalpy as follows:

$$\partial H(t) = \int_{-\infty}^{t} \phi(t-t') \partial T(t') \, dt' \tag{1}$$

Eq. (1) provides an implicit definition of the auto-correlation function. One may then define a frequency-dependent complex heat capacity in the following manner:

$$C(\omega) = \int_{0}^{\infty} \phi(t) e^{i\omega t} \, dt \tag{2}$$

with

$$C(\omega) = C'(\omega) + iC''(\omega) \tag{3}$$

where i is the imaginary unit (i = √-1)

The real portion of the heat capacity C' describes energy storage, and in an equilibrium case matches $C_p$. As used herein, the terms "real" component (or portion) and "energy storage" component are interchangeable. The imaginary portion C'' relates to the energy loss, and thus the terms "imaginary" component (or portion) and "energy loss" component are interchangeable.

In DSC measurements, heat flow

$$\Phi = \frac{dH}{dt} \tag{4}$$

is the measurement variable.

By inserting Eq. (4) into Eq. (1), one obtains the following for the measurement signal:

$$\Phi(t) = \int_{0}^{t} \phi(t-t') \beta(t') \, dt' \tag{5}$$

with

$$\beta(t) = \frac{dT}{dt} \tag{6}$$

For the case of linear systems, Eq. (5) is the correct tool for describing a differential thermal instrument employing a temperature program of the present invention.

For the thermal method of the present invention consisting of an arbitrary number of temperature programs, where each temperature program consists of equal time-duration linear segments as previously described, the following can always be written:

$$T(t) = T_0 + \beta_0 t + \sum_{k=1}^{\infty} T_k \sin(k \cdot \omega_0 \cdot t) \tag{7}$$

where $\omega_0 = \dfrac{\pi}{t_p}$ ($t_p$ is the programmed duration of each segment), $T_0$ is the starting temperature, and

$$\beta_0 = \frac{T_3 - T_1}{2t_p}$$

Then, I

$$\beta(t) = \beta_0 + \sum_{k=1}^{\infty} k\omega_0 T_k \cos(k \cdot \omega_0 \cdot t) \qquad (8)$$

n order for the data analysis to proceed with sufficiently small error, it is necessary that any time varying characteristic parameter be regarded as constant for at least the programmed duration of each segment. For this, it is required to have a thermal event that evolves sufficiently slowly and a low overall rate of change of T.

$\beta_0$ may be considered sufficiently small if:

$$\frac{\beta_0}{\omega_0} \ll 1K \qquad (9)$$

Under this condition, one obtains through insertion of Eq. (8) into (5):

$$\Phi(T) = C_\beta(T)\beta_0 + \sum_{k=1}^{\infty} k\omega_0 T_k |C(T, k\omega_0)| \cos(k\omega_0 t - \varphi_k) \qquad (10)$$

where $C_\beta(T)\beta_0 = \Phi_D$ is the average heat flow.

$C\beta$ corresponds to the heat capacity determined from a conventional DSC measurement with a linear heating rate of $\beta_o$.

If a pure relaxation transition is investigated, one obtains the overall information (the frequency-dependent complex heat capacity) directly from the overall heat flow, using standard mathematical techniques such as Fourier transformation.

If a time-dependent reaction occurs, then on neglecting the entropy variation, we find:

$$\Phi_r(t) = \left(\frac{dQ}{dt}\right)_{p,T} = -mq_{p,T}\nu(t) \qquad (11)$$

where $mq_{p,T}$ is the heat of reaction

$\nu(t)$ is the rate of reaction

$\Phi_r(t)$ is the reaction heat flow measured under isothermal conditions.

To find the heat flow during a temperature scan, it is necessary to know the temperature dependence of $\Phi_r$ ($\alpha = d\Phi_r/dT$). Using a linear approximation and the principle of superposition, we find for the relevant part of the heat flow:

$$\Phi_r(T) = \Phi_r(T_0, t) + \int_0^t \alpha(t - t')\beta(t')dt' \qquad (12)$$

If the measurement is started at a sufficiently low temperature, the first term on the right hand side of Eq. (12) may be neglected. A comparison of Eqs. (5) and (12) indicates that the principle underlying data reduction in the present case will be identical to that explained previously. However, the interpretation of the results will be different.

If the sample is sufficiently far removed from its actual equilibrium state, then the linear approximation is no longer valid. In this case, $\Phi_r$ contains little information on such reactions, which, therefore, can be detected only in the conventional DSC signal (or the averaged heat flow $\Phi_D$). C' $(T)\beta_0$ may then be used as a baseline for the analysis of the DSC signal measured in such reactions.

**Effect Of Thermal Conduction On The Measurement Signal**

The temperature sensor of a DSC is not directly in contact with the sample. Between the sample and the sensor, and within the sample itself, there is some thermal resistance to heat flow. Therefore, there is a difference between the measured temperature T and the sample temperature $T_s$. For each Fourier component of the measured temperature during a prescribed thermal method that consists of an arbitrary number of temperature programs, the following is valid:

$$T_k(t) = T_k \sin(\omega_k t) \tag{13}$$

where $\omega_k = k \cdot \omega_0$.

The corresponding temperature derivative is

$$\beta_k(t) = \omega_k T_k \cos(\omega_k t) \tag{14}$$

The effect of the thermal resistance on the measurement signal may be assessed as follows:

$$T_s(t) = \int_0^t G(t-t')\, T(t')\, dt' \tag{15}$$

and

$$\beta_s(t) = \int_0^t G(t-t')\, \beta(t')\, dt' \cdot \tag{16}$$

G(t) is the function through which the thermal resistance is described. G(t) is real.

By solving equation (16) and inserting its solution into equation (5), one obtains the following for the measured heat flow:

$$\Phi(t) = \sum_{k=1}^{\infty} \omega_k T_k |G(T, \omega_k)| |C(T, \omega_k)| \cos(\omega_k t - \varphi_k + \varphi_k^g) \tag{17}$$

The solution follows from Eqs. (18)-(24), as follows:

Insertion of Eq. (14) into Eq. (16) and the subsequent Fourier transformation of the convolution product yields:

$$\beta_s(\omega) = \frac{1}{2} \sum_{k=1}^{\infty} \omega_k T_k G(\omega)\, [\delta(\omega - \omega_k) + \delta(\omega + \omega_k)] \tag{18}$$

By Fourier transformation of Eq. (5),

$$\Phi(\omega) = \phi(\omega)\beta_s(\omega) \tag{19}$$

Using Eq. (18),

$$\Phi(\omega) \; = \; \frac{1}{2}\sum_{k=1}^{\infty} \omega_k T_k C^*(\omega) G(\omega) \left[\delta(\omega-\omega_k) \; + \; \delta(\omega + \omega_k)\right] \tag{20}$$

The inverse transformation yields

$$\Phi(t) \; = \; \frac{1}{2}\sum_{k=1}^{\infty} \omega_k T_k \left[C^*(\omega_k) G(\omega_0) e^{i\omega_0 t} \; + \; C^*(-\omega_k) G(-\omega_k) e^{-i\omega_k t}\right] \tag{21}$$

Since G(t) is real, $G(\omega) = G^*(-\omega)$. Hence,

$$\Phi(t) \; = \; \sum_{k=1}^{\infty} \omega_k T_k Re\left[C^*(\omega_k) G(\omega_k) e^{i\omega_k t}\right] \tag{22}$$

or

$$\Phi(t) \; = \; \sum_{k=1}^{\infty} \omega_k T_k Re\left[\left|C(\omega_k)\right| \; \left|G(\omega_k)\right| e^{i(\omega_k t - \varphi_k + \varphi_k^g)}\right] \tag{23}$$

$$= \; \sum_{k=1}^{\infty} \omega_k T_k \left|G_k\right| \; \left|C_k\right| \cos\left(\omega_k t - \varphi_k + \varphi_k^g\right) \tag{24}$$

It can be recognized that the amplitude of each component of the heat flow is modified by $|G_k|$, and that owing to the thermal resistance, an additional phase shift $\varphi_k^g$ comes into existence.

This influence of thermal conduction can be eliminated by means of a calibration. For this, a substance is needed with no energy loss component in its heat capacity, such as sapphire.

The calibration factor for the amplitude of a particular Fourier component is obtained from

$$K_k = \frac{\omega_k T_k C_p(T_k)}{\Phi_a(T_k, \omega_k)} \tag{25}$$

When using the sapphire standard, the phase shift between each temperature and heat flow Fourier component is equal to $\varphi_k^g$.

It can be shown that the calibration factor $K_k$ is of the form

$$K_k = K(\omega_k, k_s, T_k, T) \tag{26}$$

where $k_s$ is the heat transfer coefficient between the sample and the temperature sensor. In the case of sufficiently thin samples, it can be shown that the above function (26), in fact, reduces to $K'_k(\omega_k, \varphi_k^g)$ where $\varphi_k^g$ is the heat flow phase, measured in the absence of any time-dependent thermal event. The calibration factor $K_k$ or $K_k' (\omega_k, \varphi_k^g)$, represents a universal calibration function which incorporates implicitly physical properties of the sample (e.g., heat transfer) through its dependence on $\varphi_k^g$. This function can be determined for any instrument (whether a DTA or a DSC of the heat flux or power compensation type) using a known standard, such as sapphire. Once obtained it can be used in a wide range of temperatures, and allows the user to measure absolute (as opposed to relative) values of the complex specific heat for <u>any</u> sample.

## Implementation Of An Embodiment Of The Iavention

The following is a step-by-step description of an embodiment of the method and apparatus of the invention. Other embodiments will be apparent to those skilled in the art.

The user selects a temperature program consisting of two or more equal time-duration linear segments as previously described.

The instrument 10 (Fig. 1) records the sample temperature, as measured by the sensor 44 located close to the sample material, and, for a power compensation DSC, the differential power that is applied to maintain the sample and the reference at the same temperature throughout the applied temperature program. For a heat flux DSC, the instrument 94 (Fig. 3) records the sample temperature as measured by a sensor 86 located close to the sample material and the differential heat flow. In a DTA instrument 96 (Fig. 2), a sensor 76 imbedded in the sample material measures the sample temperature and the differential heat flow is measured by sensors 76 and 78. The recorded signals are analyzed over a moving interval in order to retrieve the analytically significant information.

The analysis proceeds in accord with the following steps:

1. *Calculate the in-phase and in-quadrature components of the heat flow and temperature signals:* At each point, the numerical integral of $\Phi(t)$ and $T(t)$, suitably multiplied by sine and cosine functions, over an interval consisting of exactly an integer number of temperature programs and centered on that point, is calculated. Using the orthogonality property of circular functions over an integer number of periods, the inphase ($\Phi_{\sin}^{k}$ and $T_{\sin}^{k}$) and quadrature ($\Phi_{\cos}^{k}$ and $T_{\cos}^{k}$) components of a particular Fourier component of $\Phi(t)$ and $T(t)$ can be derived from the integration results. Each component is associated with the centroid of the integration interval.

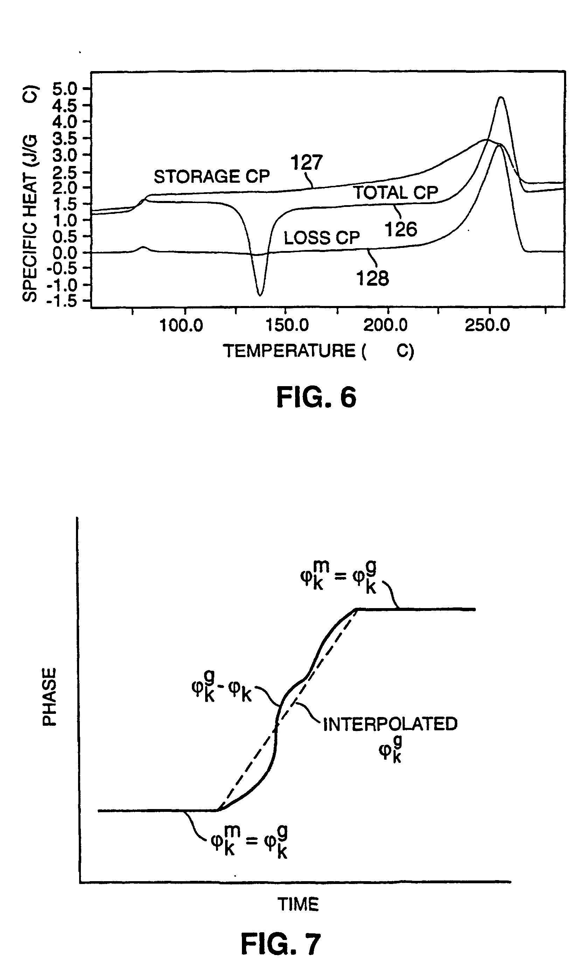

2. Calculate *the actual* heat *flow phase* $\varphi_{k}^{g}$: At each point of an equilibration period preceding and following the commanded temperature program, the difference between the measured heat flow phase $\varphi_{k}^{m} = \tan^{-1} (\Phi_{\sin}^{k} / \Phi_{\cos}^{k})$ and the temperature phase $\varphi_{k}^{T} = -\tan^{-1} (T_{\cos}^{k} / T_{\sin}^{k})$ of a particular Fourier component is obtained $\varphi_{k}^{g} = \varphi_{k}^{m} - \varphi_{k}^{T}$. The value of $\varphi_{k}^{g}$ during the actual thermal method is then calculated by linear interpolation between the values derived in the adjoining equilibration temperature program. One method of interpolation is shown in Fig. 7.

3. *Calculate the instantaneous calibration constant:* At each point, the actual heat flow phase $\varphi_{k}^{g}$, as calculated in the previous step, is used as an argument in a universal calibration function to obtain the specific heat calibration constant $K_{k}$ appropriate to the selected Fourier component and the actual experimental conditions extant for that particular point.

4. *Calculate* the real and *imaginary components of the specific heat*: $C'_{k}$ and $C''_{k}$ are calculated at each point by solving the following set of simultaneous equations:

$$C_{k}^{'} \cos(\varphi_{k}^{g} + \varphi_{k}^{T}) - C_{k}^{"} \sin(\varphi_{k}^{g} + \varphi_{k}^{T}) = K_{k} \Phi_{cos}^{k} / (T_{k} \omega_{k}) \tag{27}$$

$$C_{k}^{'} \sin(\varphi_{k}^{g} + \varphi_{k}^{T}) + C_{k}^{"} \cos(\varphi_{k}^{g} + \varphi_{k}^{T}) = K_{k} \Phi_{sin}^{k} / (T_{k} \omega_{k}) \tag{28}$$

where $T_{k} = (T_{cos}^{k\ 2} + T_{sin}^{k\ 2})^{\frac{1}{2}}$ and $\omega_{k} = k \cdot \omega_{0}$.

5. *Smooth the calculated signals:* $C'_{k}$ and $C''_{k}$ are smoothed at each point by normalized numerical integration over an interval consisting of exactly an integer number of temperature programs and centered on that point. Each calculated value is associated with the centroid of the integration interval.

Once $C'_{k}$ and $C''_{k}$ have been obtained at each point, the corresponding absolute value (modulus) of the complex specific heat may be calculated according to

$$C_{abs}^{k} = [\, C_{k}^{'2} + C_{k}^{"2}\,]^{\frac{1}{2}}$$

## Examples

The following experimental data were obtained using a Perkin-Elmer DSC-7 "power compensation" Differential Scanning Calorimeter connected to a Perkin-Elmer TAC-7/DX Thermal Analysis Controller that communicates with a Perkin-Elmer Unix 7-Series data station. All samples used in the experiments are readily available commercial products. Sample sizes are as indicated below.

### Figure 4

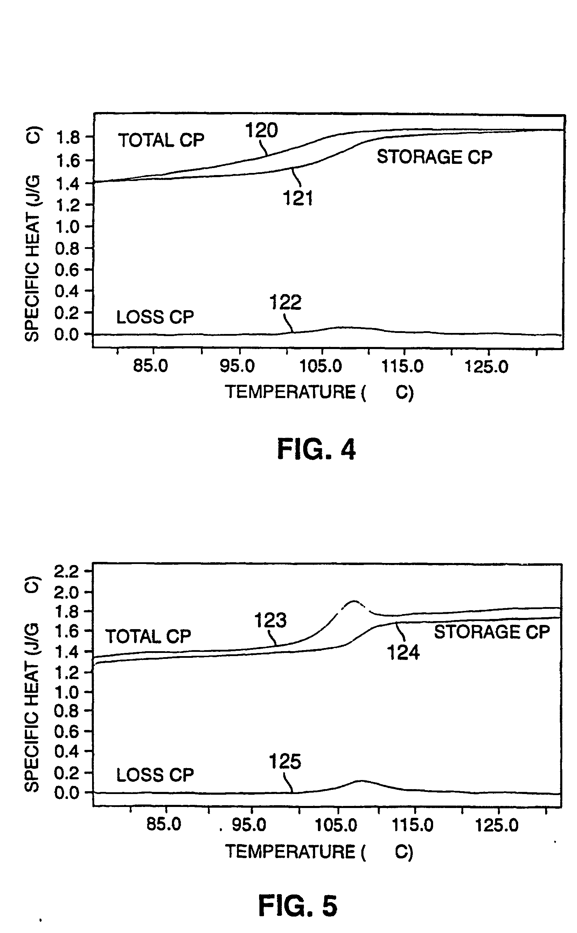

Fig. 4 shows the glass transition of polystyrene (PS) measured in a run made up of temperature programs of the type shown in Fig. 1E, with the following parameters: $T_1 = 135°C$, $T_3 = 133.5°C$, t = 15 seconds. The sample weight was 19.070 mg.

The total $C_p$ 120 is equal to the value obtained with conventional DSC and is identical to $C_{\beta}$. The inflection point of total $C_p$ occurs at a lower temperature than that of C' (storage $C_p$ 121). In contrast to C', the $T_g$ measured using total $C_p$ depends on the overall rate of change of the temperature. The inflection point of C' is correlated with the peak in the loss $C_p$ 122 (C"). Both the shape and the temperature dependence of C' and C" are in accord with the theories of relaxation in glass transition.

### Figure 5

Fig. 5 shows the glass transition of polystyrene (PS) measured in a run made up of temperature programs of the type shown in Fig. 1A, with the following parameters: $T_1 = 75°C$, $T_3 = 76.5°C$, t = 15 sec. The sample weight was 19.070 mg.

The total $C_p$ 123 exhibits the same behavior as seen with a conventional DSC. An enthalpy relaxation peak is superimposed on the glass transition and is only observable in the total $C_p$ curve. C' (storage $C_p$ 124) has an inflexion point similar to that of Figure 4. In Fig. 5, the loss $C_p$ is designated as curve 125.

### Figure 6

Fig. 6 shows a thermogram of quench cooled PET resulting from a run made up of temperature programs of the type shown in Fig. 1B, with the following parameters: $T_1 = 50°C$, $T_3 = 52°C$, t = 30 sec. The sample weight was 16.170 mg.

Three transitions can be seen: the glass transition around 70°C, the recrystallization around 120°C and the melting around 200°C. The glass transition exhibits the same behavior as discussed for polystyrene. The recrystallization is a transition of the strongly undercooled melt in the polymer crystal. The melt is far removed from equilibrium. The transition is possible in only one direction and is therefore only barely seen in the dynamic specific heat. Only C" (loss $C_p$ 128) has a small peak. C' (storage $C_p$ 127) can be used as a baseline in the evaluation of the total $C_p$ 126. As far as the melting is concerned, C' exhibits a change at lower temperatures, while C" remains unchanged in that range. The peak maximum of C" occurs at a somewhat larger temperature than that of C'.

## Claims

**1.** A differential analysis apparatus comprising:

    means for holding a sample (58) and means for holding a reference (56);
    means (46,52) for subjecting a sample in said sample means (58) and a reference in said reference means (56) to an externally applied disturbance in accord with a temperature program comprising at least two linear segments (100,101) of equal time duration;
    means (60) for repeating the temperature program a selected number of times;
    means (68) for receiving data representative of differential signals resulting from the sample and reference being subjected to the externally applied disturbance in accord with the temperature program;

    **characterized by**
    means (69) to process said data to provide at least one characteristic parameter of said sample and to separate said at least one characteristic parameter into

one component related to the energy storage portion of said at least one characteristic parameter and being derived from the real component of said at least one characteristic parameter, and

into another component related to the energy loss portion of said at least one characteristic parameter and being derived from the imaginary component of said at least one characteristic parameter.

2. The apparatus of claim 1 wherein the apparatus is a power compensation DSC instrument.

3. The apparatus of claim 1 wherein the apparatus is a heat flux DSC instrument or a DTA instrument.

4. The apparatus of claim 1 wherein the temperature program comprises an isothermal segment (100) and a linear heat scan segment (101).

5. The apparatus of claim 1 wherein the temperature program comprises a linear heat scan segment (114) and a linear cool scan segment (115).

6. The apparatus of claim 1 wherein the characteristic parameter is heat capacity.

7. A method of analyzing a sample using a differential scanning calorimeter comprising:

   subjecting a sample (58) and a reference (56) to an externally applied disturbance in accord with a temperature program comprising at least two linear segments (100,101) of equal time duration;

   repeating the temperature program a selected number of times;

   detecting a differential signal representative of at least one characteristic parameter of the sample (58);

   processing said signal to determine a calibration factor relating to a universal calibration function $K_k$ or $K_k'$;

   **characterized by**
   using said universal calibration constant to provide separate components of said characteristic parameter of the sample (58), whereby
   one component is related to the energy storage portion of said at least one characteristic parameter and is derived from the real component of said at least one characteristic parameter, and
   another component is related to the energy loss portion of said at least one characteristic parameter and is derived from the imaginary component of said at least one characteristic parameter.

8. The method of claim 7 wherein said applied disturbance is temperature change.

9. The method of claim 8 wherein said characteristic parameter is heat capacity.

10. The method of claim 8 wherein the temperature control comprises a linear heat scan segment (114) and a linear cool scan segment (115).

11. The method of claim 8 wherein the temperature program comprises an isothermal segment (100) and a linear heat scan segment (101).

12. The apparatus of claim 1 also comprising means (69) for calculating the modulus of the complex specific heat utilizing the components relating to the energy storage and energy loss portions.

**Patentansprüche**

1. Eine Vorrichtung zur differenziellen Analyse, welche umfasst.
   eine Einrichtung zum Aufnehmen einer Probe (58) und eine Einrichtung zum Aufnehmen einer Referenz (56);
   eine Einrichtung (46,52), um eine Probe in der Probeneinrichtung (58) und eine Referenz in der Referenzeinrichtung (56) einer von außen aufgebrachten Störung gemäß einem Temperaturprogramm, welches mindestens zwei lineare Abschnitte (100, 101) von gleicher Zeitdauer umfasst, zu unterziehen;

eine Einrichtung (60), um das Temperaturprogramm ein ausgewählte Anzahl mal zu wiederholen;

eine Einrichtung (68) zum Empfang von Daten, welche repräsentativ für differenzielle Signale sind, welche von der Probe und der Referenz stammen, welche der von außen eingebrachten Störung gemäß dem Temperaturprogramm unterworfen sind;

**gekennzeichnet durch**

eine Einrichtung (69), um die Daten zu verarbeiten, um mindestens einen kennzeichnenden Parameter der Probe bereitzustellen, und den mindestens einen Parameter zu separieren in

eine Komponente, welche sich auf den Energiespeicherungsanteil des mindestens einen kennzeichnenden Parameters bezieht und aus der realen Komponente des mindestens einen kennzeichnenden Parameters abgeleitet ist, und

in eine weitere Komponente, welche sich auf den Energieverlustanteil des mindestens einen kennzeichnenden Parameters bezieht und aus der imaginären Komponente des mindestens einen kennzeichnenden Parameters abgeleitet ist.

2. Die Vorrichtung gemäß Anspruch 1, wobei die Vorrichtung ein leistungskompensierendes DSC-Gerät ist.

3. Die Vorrichtung gemäß Anspruch 1, wobei die Vorrichtung ein Wärmefluss-DSC-Gerät oder ein DTA-Gerät ist.

4. Die Vorrichtung gemäß Anspruch 1, wobei das Temperaturprogramm einen isothermen Abschnitt (100) und einen Abschnitt eines linearen Erwärmungsablaufs (101) umfasst.

5. Die Vorrichtung gemäß Anspruch 1, wobei das Temperaturprogramm einen Abschnitt eines linearen Erwärmungsablaufs (114) und einen Abschnitt eines linearen Abkühlablaufs (115) umfasst.

6. Die Vorrichtung gemäß Anspruch 1, wobei der kennzeichnende Parameter die Wärmekapazität ist.

7. Ein Verfahren zur Analyse einer Probe unter Verwendung eines differenzieren Ablaufkalorimeters, wobei das Verfahren umfasst:

eine Probe (58) und eine Referenz (56) einer von außen aufgebrachten Störung gemäß Störung gemäß einem Temperaturprogramm zu unterziehen, welches mindestens zwei lineare Abschnitte (100, 101) von gleicher Zeitdauer umfasst;

wiederholen des Temperaturprogramms ein ausgewählte Anzahl mal;

detektieren eines differenzieren Signals, welches repräsentativ ist für mindestens einen kennzeichnenden Parameter der Probe (58);

verarbeiten des Signals, um einen Eichfaktor zu bestimmen, welcher sich auf eine universelle Eichfunktion $K_k$ oder $K_k'$ bezieht;
**gekennzeichnet durch**

verwenden der universellen Eichkonstante, um separierte Komponenten des kennzeichnenden Parameters der Probe (58) bereitzustellen, wobei

eine Komponente sich auf den Energiespeicherungsanteil des mindestens einen kennzeichnenden Parameters bezieht und aus der realen Komponente des mindestens einen kennzeichnenden Parameters abgeleitet ist, und

eine weitere Komponente sich auf den Energieverlustanteil des mindestens einen kennzeichnenden Parameters bezieht und aus der imaginären Komponente des mindestens einen charakteristischen Parameters abgeleitet ist.

8. Das Verfahren des Anspruchs 7, wobei die aufgebrachte Störung eine Temperaturänderung ist.

9. Das Verfahren des Anspruchs 8, wobei der kennzeichnende Parameter die Wärmekapazität ist.

10. Das Verfahren gemäß Anspruch 8, wobei das Temperaturprogramm einen Abschnitt eines linearen Erwärmungsablaufs (114) und einen Abschnitt eines linearen Abkühlablaufs (115) umfasst.

11. Das Verfahren gemäß Anspruch 8, wobei das Temperaturprogramm einen isothermen Abschnitt (100) und einen Abschnitt eines linearen Erwärmungsablaufs (101) umfasst.

12. Die Vorrichtung gemäß Anspruch 1, ebenso umfassend eine Einrichtung (69) zur Berechnung des Modulus der komplexen spezifischen Wärme unter Verwendung der Komponenten, welche sich auf den Energiespeicherungs- und auf den Energieverlustanteil beziehen.

**Revendications**

1. Dispositif d'analyse différentielle comprenant :

   un moyen (58) de maintien d'un échantillon et un moyen (56) de maintien d'une référence;
   un moyen (46, 52) de soumission d'un échantillon placé dans ledit moyen de maintien d'échantillon (58) et d'une référence placé dans ledit moyen de référence (56) à une perturbation appliquée de façon externe en corrélation avec un programme d'application de température présentant au moins deux segments linéaires (100, 101) de durée temporelle égale ;
   un moyen (60) agencé pour répéter le programme de température un nombre sélectionné de fois ;
   un moyen (68) de réception des données représentant des signaux différentiels résultant de l'échantillon et de la référence soumis à la perturbation appliquée de façon externe en corrélation avec le programme de température ;

   **caractérisé par**
   un moyen (69) de traitement desdites données agencé pour fournir au moins un paramètre caractéristique dudit échantillon et pour isoler ledit paramètre caractéristique en
   un composant relié à la partie de stockage d'énergie dudit paramètre caractéristique et dérivant du composant réel dudit paramètre caractéristique, et en un autre composant relié à la partie de perte d'énergie dudit paramètre caractéristique et dérivant du composant imaginaire dudit paramètre caractéristique.

2. Dispositif selon la revendication 1, dans lequel le dispositif est un instrument d'analyse calorimétrique à compensation de puissance.

3. Dispositif selon la revendication 1, dans lequel le dispositif est un instrument d'analyse calorimétrique à flux thermique ou un instrument d'analyse thermique différentielle.

4. Dispositif selon la revendication 1, dans lequel le programme de température comprend un segment isotherme (100) et un segment à balayage calorifique linéaire (101).

5. Dispositif selon la revendication 1, dans lequel le programme de température comprend un segment à balayage calorifique linéaire (114) et un segment à balayage de refroidissement linéaire (115).

6. Dispositif selon la revendication 1, dans lequel le paramètre caractéristique est la capacité calorifique.

7. Procédé d'analyse d'un échantillon utilisant un calorimètre à balayage différentiel comprenant :

   la soumission d'un échantillon (58) et d'une référence (56) à une perturbation appliquée de façon externe en corrélation avec un programme de température comprenant au moins deux segments linéaires (100, 101) de durée temporelle égale ;
   la répétition du programme de température un nombre sélectionné de fois ;
   la détection d'un signal différentiel représentant au moins un paramètre caractéristique de l'échantillon (58) ;
   le traitement dudit signal afin de déterminer un facteur d'étalonnage relatif à une fonction d'étalonnage universelle $K_k$ ou $K_k'$.
   **caractérisé par**
   l'utilisation de ladite constante d'étalonnage universelle afin de fournir des composants séparés dudit paramètre caractéristique de l'échantillon (58), moyennant quoi
   un composant est relié à la partie de stockage d'énergie dudit paramètre caractéristique et est dérivé du composant réel dudit paramètre caractéristique, et
un autre composant est relié à la partie de perte d'énergie dudit paramètre caractéristique et est dérivé du composant imaginaire dudit paramètre caractéristique.

8.  Procédé selon la revendication 7, dans lequel ladite perturbation appliquée est le changement de température.

9.  Procédé selon la revendication 8, dans lequel ledit paramètre caractéristique est la capacité calorifique.

10. Procédé selon la revendication 8, dans lequel le programme de température comprend un segment à balayage calorifique linéaire (114) et un segment à balayage de refroidissement linéaire (115).

11. Procédé selon la revendication 8, dans lequel le programme de température comprend un segment isotherme (100) et un segment à balayage calorifique linéaire (101).

12. Dispositif selon la revendication 1 comprenant également le moyen (69) de calcul du module de la chaleur spécifique complexe utilisant les composants relatifs aux parties de stockage d'énergie et de perte d'énergie.

**FIG. 1**

**FIG. 1A**

**FIG. 1B**

FIG. 1C

FIG. 1D

FIG. 1E

FIG. 1F

FIG. 1G

FIG. 1H

FIG. 2

FIG. 3

**FIG. 4**

**FIG. 5**

**FIG. 6**

**FIG. 7**